# EUROPEAN PATENT SPECIFICATION

(11) **EP 3 629 407 B1**
(45) Date of publication and mention of the grant of the patent: **10.01.2024**
(21) Application number: 19169088.2
(22) Date of filing: 12.04.2019
(51) Int. Cl.: H01M 4/64, H01M 4/66, H01M 4/70, H01M 4/74

(54) **CURRENT COLLECTOR, ELECTRODE PLATE INCLUDING THE SAME AND ELECTROCHEMICAL DEVICE**
STROMKOLLEKTOR, ELEKTRODENPLATTE DAMIT UND ELEKTROCHEMISCHE VORRICHTUNG
COLLECTEUR DE COURANT, PLAQUE D'ÉLECTRODE LE COMPRENANT ET DISPOSITIF ÉLECTROCHIMIQUE

(30) Priority: 30.09.2018 CN 201811158483
(43) Date of publication of application: 01.04.2020
(60) Divisional application: 23211500.6
(73) Proprietor: Contemporary Amperex Technology Co., Limited, Ningde City, Fujian PRC 352100 (CN)
(72) Inventor: LIANG, Chengdu, Ningde City, Fujian Province (CN); HUANG, Huafeng, Ningde City, Fujian Province (CN); HUANG, Qisen, Ningde City, Fujian Province (CN); LIU, Xin, Ningde City, Fujian Province (CN)
(74) Representative: von Tietzen und Hennig, Nikolaus

(56) References cited:
- CN-A- 106 981 665
- JP-A- 2003 282 064
- JP-B2- 5 333 822
- US-A1- 2012 315 537

## Description

### TECHNICAL FIELD

The present disclosure relates to the technical field of battery, and in particular, relates to a current collector, an electrode plate including the current collector, and an electrochemical device.

### BACKGROUND

Lithium-ion batteries have been widely applied in electric vehicles and consumer electronic products due to their advantages such as high energy density, high output power, long cycle life, and low environmental pollution. However, when lithium-ion batteries are subjected to abnormal conditions such as extrusion, collision, or puncture, they can easily catch fire or explode, causing serious problems. Therefore, the safety issue of the lithium-ion batteries greatly limits the application of disclosure and popularization of the lithium-ion batteries.

A large number of experimental results show that an internal short circuit in a battery is the ultimate cause of safety hazards of the lithium-ion batteries. In order to avoid the internal short circuit in the battery, the researchers tried to improve the separator structure, battery mechanical structure and the like. Some of these studies have improved the safety performance of lithium-ion batteries by modifying the design of current collectors.

The temperature in the battery may rise when an internal short circuit occurs in the battery due to abnormal conditions such as collision, extrusion, or puncture and the like. According to a technical solution in the related art, alloy having a low melting point is added into the material of a metal current collector. With increasing of the temperature of the battery, the alloy having low-melting point in the current collector begins to melt, thereby resulting in a broken circuit of an electrode plate and cutting off the current. In this way, the safety of the battery is improved. According to another technical solution in the prior art, a multilayered current collector is adopted, in which both sides of a resin layer are connected with metal layers to form a composite. When the temperature of the battery reaches a melting point of the material of the resin layer, the resin layer of the current collector melts to damage the electrode plate, thereby cutting off the current, and enhancing the safety of the battery.

However, these solutions in the related art cannot effectively prevent the occurrence of the internal short circuit in the lithium-ion battery, and cannot guarantee that the battery can continue to operate under the abnormal conditions. In the above solutions, the temperature in the battery would still rise sharply after the internal short circuit occurs in the battery. When the battery temperature rises sharply, if the safety component fails to respond immediately, dangers of different degrees would still occur. In addition, in these solutions, even the safety component responds and successfully avoids the hazard of the battery, the battery still cannot continue to operate. US2012/315537A1 discloses a current collector, including: a polymer film including a first major surface, an opposite second major surface, and a plurality of openings extending through a thickness of the polymer film; a first layer on the first major surface of the polymer film; a second layer on the second major surface of the polymer film; and a third layer on an inner surface of an opening of the plurality of openings, wherein the third layer contacts the first layer and the second layer, and wherein the first layer, the second layer, and the third layer each independently has an electrical conductivity of greater than 10 Siemens per meter. JP5333822B2 discloses that at the conductive substrate for plating, an insulating layer is formed on a surface of the conductive substrate, and a recess for forming broad plating is formed at the insulating layer toward the direction of its aperture, characterized in that the hardness is 170Hv or more for the surface of the conductive substrate for plating, preferably, the arithmetic mean roughness (Ra) for the surface of the conductive substrate is 0.03-0.6µm, and the reflection factor of the surface is 5-60% or haze when imprinting the surface of the conductive substrate to resin is 5-60. JP2003282064A discloses that by forming electric conduction treatment layers 12a and 12b on both faces of a resin film 11 with many through-holes 15, and after forming metal-plating layers 13a, 13b and 13c on the electric conduction treatment layers by an electrolysis metal-plating treatment, the compound current collector has a surface electric resistance of 40 mQ/cm or less, a tensile strength of 0.8 kg/cm, and a front-back resistance of the electric conduction of 100 mQ/cm or less, and a formula Y1+Y2+Y3≤0.8×(X1+X2+X3) × Y3/X3 is satisfied further, where X1 is the thickness (µm) of the resin film, X2 is the thickness (µm) of the electric conduction treatment layer, X3 is the thickness (µm) of the metal-plating layer, Y1 is the weight (mg/cm<SP>2</SP>) of the resin film, Y2 is the weight (mg/cm<SP>2</SP>) of the electric conduction treatment layer, and Y3 is the weight (mg/cm<SP>2</SP>) of the metal-plating layer. CN106981665A discloses a negative electrode current collector and a fabrication method and application thereof, the negative electrode current collector has a multi-layer structure and comprises a plastic thin film, wherein an adhesive strength improvement layer, a copper metal plating layer and an oxidization-prevention layer are sequentially plated on an upper surface and a lower surface of the plastic thin film, the fabrication method comprises the steps of sequentially plating the adhesive strength improvement layer on the plastic thin film by a magnetron sputtering coating process, plating copper by an evaporation coating process, and plating the oxidization-prevention layer by an electron beam evaporation or magnetron sputtering coating process, the negative electrode current collector is mainly applied to a lithium ion battery, by the negative electrode current collector, the lightness of the battery can be achieved, the energy density is improved, the cost is reduced, and the copper plating layer cannot be liable to fall off and is not liable to oxidize.

Therefore, it is necessary to provide a design of a positive current collector and a battery that can effectively prevent accidents such as firing and explosion caused by the occurrence of the internal short circuit under the abnormal conditions such as collision, extrusion or puncture, without affecting the normal operation of the battery.

### SUMMARY

The present disclosure provides a current collector, an electrode plate including the current collector, and an electrochemical device.

A first aspect of the present disclosure provides a current collector. The current collector includes: an insulation layer; a conductive layer at least located on at least one surface of the insulation layer; and a first protective layer provided on a surface of the conductive layer facing away from the insulation layer. The current collector is provided with a plurality of holes penetrating through the insulation layer, the conductive layer and the first protective layer, and the first protective layer is made of a metal oxide. The insulation layer is added with a colorant for adjusting a light transmittance T of the insulation layer, and the light transmittance T of the insulation layer satisfies: 0 ≦ T ≦ 98%, according to the independent claim 1.

A second aspect of the present disclosure provides an electrode plate including the current collector according to the first aspect and an electrode active material layer at least formed on at least one surface of the current collector.

A third aspect of the present disclosure provides an electrochemical device including a positive electrode plate, a separator, and a negative electrode plate. The positive electrode plate and/or the negative electrode plate is the electrode plate according to the second aspect.

The technical solutions of the present disclosure have at least the following beneficial effects.

In the current collector according to present disclosure, the conductive layer and the first protective layer made of the metal oxide are arranged on the surface of the insulation layer. In this way, on one hand, the current collector according to the present disclosure can increase a short-circuit resistance of the battery when the short circuit occurs under abnormal conditions, such that the short circuit current can be greatly reduced, and thus the heat generated by the short circuit can be greatly reduced, thereby improving the safety performance of the battery. On the other hand, the protective layer in the current collector according to the present disclosure can increase the mechanical strength of the conductive layer, further improve the safety performance of the battery, and at the same time prevent the conductive layer from being damaged, oxidized or corroded, etc., and thus significantly improve a long-term reliability and a service life of the current collector. Moreover, providing the plurality of holes penetrating through the insulation layer, the conductive layer and the first protective layer can facilitate electrolyte passing through and improve wettability of electrolyte of electrodes of the current collector, thereby reducing polarization of the electrodes and the battery and improving electrochemical properties of the battery such as properties of charge-discharge at high rate and cycle life. Moreover, providing the plurality of holes in the current collector can further reduce the weight of the current collector and increase the weight energy density of the battery.

Further, the conductive layer is further located on wall surfaces of the plurality of holes, and for each of the plurality of holes having the conductive layer disposed on its wall surface, the conductive layer is located on an entirety or a part of the wall surface. In an example, a part of the conductive layer located on the at least one surface of the insulation layer is partially or entirely connected to a part of the conductive layer located on the wall surfaces of the holes. Preferably, the conductive layer is disposed on the upper surface and the lower surface of the insulation layer, and a part of the conductive layer located on the upper surface and the lower surface of the insulation layer is partially or entirely connected to a part of the conductive layer located on the wall surfaces of the holes. This can further improve the conductive performance of the current collector, reduce polarization of the electrodes and the battery and improve electrochemical properties of the battery such as properties of charge-discharge at high rate and cycle life.

Further, the light transmittance T of the insulation layer satisfies: 0 ≦ T ≦ 98%, preferably 15% ≦ T ≦ 95%, and more preferably 15 % ≦ T ≦ 90%. In view of this, it is possible to improve the absorption efficiency of the insulation layer for laser light, thereby improving the processability of the current collector when laser cutting is performed in forming the holes.

### BRIEF DESCRIPTION OF DRAWINGS

FIG. 1 is a top view of a positive current collector according to an embodiment of the present disclosure;
FIG. 2 is a section view of the positive current collector as shown in FIG. 1;
FIG. 3 is a three-dimensional section view of the positive current collector as shown in FIG. 1;
FIG. 4 is a section view of another positive current collector according to an embodiment of the present disclosure;
FIG. 5 is a top view of another negative current collector according to an embodiment of the present disclosure;
FIG. 6 is a section view of a positive electrode plate according to an embodiment of the present disclosure; and
FIG. 7 is a section view of another negative electrode plate according to an embodiment of the present disclosure.

### Reference signs:

1 - positive electrode plate;
   10 - positive current collector;
      101 - positive insulation layer;
      102 - positive conductive layer;
      1031- first protective layer;
      1032- second protective layer
   11 - positive active material layer;
   201 - hole;
2 - negative electrode plate;
   20 - negative current collector;
      201 - negative insulation layer;
      202 - negative conductive layer;
      2031- first protective layer;
      2032- second protective layer
   21- negative active material layer;
   401 - hole.

### DESCRIPTION OF EMBODIMENTS

The present disclosure is further described below by means of embodiments. It should be understood that these embodiments are merely used for illustrating the present disclosure, but not intended to limit the present disclosure.

The structure and properties of the current collector according to the first aspect of the embodiments of the present disclosure is described in details below.

The present disclosure relates to a current collector. The current collector includes an insulation layer and a conductive layer at least located on at least one surface of the insulation layer. The current collector further includes a first protective layer provided on a surface of the conductive layer facing away from the insulation layer. The current collector is provided with a plurality of holes penetrating through the insulation layer, the conductive layer and the first protective layer. The first protective layer is made of a metal oxide.

In the current collector according to the present disclosure, the conductive layer and the first protective layer made of the metal oxide are arranged on the surface of the insulation layer. In this way, on one hand, since the insulation layer of the current collector according to the present disclosure is non-conductive, its resistance is large, which can increase a short-circuit resistance of the battery when the short circuit occurs under abnormal conditions, such that the short circuit current can be greatly reduced, and thus the heat generated by the short circuit can be greatly reduced, thereby improving the safety performance of the battery. On the other hand, the protective layer in the current collector according to the present disclosure can increase the mechanical strength of the conductive layer, further improve the safety performance of the battery, and at the same time prevent the conductive layer from being damaged, oxidized or corroded, etc., and thus significantly improve a long-term reliability and a service life of the current collector. Moreover, the weight energy density of the battery can be increased by replacing the conventional current collector of a metal foil with the composite current collector of the insulation layer and the conductive layer.

Further, providing the current collector with the plurality of holes penetrating through the insulation layer and the conductive layer can facilitate stress relief of the conductive layer, which can greatly improve a binding force between the conductive layer and the insulation layer, facilitate the electrolyte passing through, and improve wettability of the electrolyte of electrodes of the current collector, thereby reducing polarization of the electrodes and the battery and improving electrochemical properties of the battery such as properties of charge-discharge at high rate and cycle life. Moreover, providing the plurality of holes in the current collector can further reduce the weight of the current collector and increase the weight energy density of the battery.

As an example, the conductive layer may be also located on wall surfaces of the plurality of holes, and for each of the plurality of holes having the conductive layer disposed on its wall surface, the conductive layer is located on an entirety or a part of the wall surface of the hole. Moreover, a part of the conductive layer located on the at least one surface of the insulation layer is partially or entirely connected to a part of the conductive layer located on the wall surfaces of the holes. Preferably, the conductive layer is disposed on the upper surface and the lower surface of the insulation layer, and a part of the conductive layer located on the upper surface and the lower surface of the insulation layer is partially or entirely connected to the part of the conductive layer located on the wall surfaces of the holes.

Therefore, the conductive layer firmly "grips" the insulation layer from the at least one surface of the insulation layer and the plurality of holes. The bonding between the insulation layer and the conductive layer is not limited to the plane direction, but also the depth direction, which can strengthen the bonding force between the conductive layer and the insulation layer, thereby improving the long-term reliability and service life of the current collector. Especially when the conductive layer is disposed on the upper surface and the lower surface of the insulation layer and the wall surfaces of the plurality of holes, the bonding between the conductive layer and the insulation layer may be stronger. In the current collector, since the insulation is non-conductive, the conductive property becomes a "letdown" of the composite current collector. By providing the conductive layer on at least one surface of the insulation layer and the wall surfaces of the plurality of holes, a three-dimensional conductive network having multiple point positions can be formed in the current collector. This can greatly improve the conductivity property of the composite current collector, reduce the polarization of the electrode plate and the battery, and improve electrochemical properties of the battery such as properties of charge-discharge at high rate and cycle life. In addition, the special perforation design can allow electrons in the conductive layer on two surfaces of the insulation layer to "converge" together, thereby avoiding a design in which it is required to arrange separate current leads coming out of the two conductive layers.

It should be understood that the part of the conductive layer located on the wall surfaces of the plurality of holes and the part of the conductive layer located on the at least one surface of the insulation layer may have a same thickness or different thicknesses, and may be made of a same material or different materials. For each of the plurality of holes having the conductive layer disposed on its wall surface, the conductive layer is located on an entirety or a part of the wall surface, preferably on an entirety of the wall surface. As an example, a part of the conductive layer located on at least one surface of the insulation layer is connected to a part of the conductive layer located on the wall surfaces of the holes.

The holes have an aperture in a range from 0.001mm to 3mm. In this range, not only the effects of improving safety and polarization can be achieved, but also it is easier to process the current collector and breakage and the like is unlikely to occur during the processing.

An area ratio of the holes to an entire surface of the conductive layer disposed on one surface of the insulation layer is 0.1% to 30%. Within this range, not only the effects of improving safety and polarization can be achieved, but also it is easier to process the current collector and breakage and the like is unlikely to occur during the processing.

A spacing between two of the holes is in a range from 0.2 mm to 5 mm. The holes be equally spaced apart from one another or can be in a multi-pitch distribution within the range. As an example, the holes are equally spaced apart from one another.

The shape of the hole may be one of a parallelogram, a parallel-like quadrilateral, a circle, a circle-like, an ellipse, and an ellipse-like shape.

The conductive layer has a thickness of D2, where 30nm ≦ D2 ≦ 3µm.

The insulation layer of the current collector according to the present disclosure is non-conductive and the conductive layer of the current collector according to the present disclosure is thin (30nm ≦ D2 ≦ 3µm), so its resistance is large. This can increase a short-circuit resistance of the battery when the short circuit occurs under abnormal conditions, such that the short circuit current can be greatly reduced, and thus the heat generated by the short circuit can be greatly reduced, thereby improving the safety performance of the battery.

On the other hand, due to the thin conductive layer of the current collector in the present disclosure, the metal burrs occurring inside the battery cell under abnormal conditions such as nailing may be small, which can reduce the risk of short circuit caused by the metal burrs piercing the separator and then contacting the negative electrode directly, and thus improve the safety performance of the battery.

Moreover, due to the thin conductive layer, the weight of the current collector can be reduced and the weight energy density of the battery can be increased.

The metal oxide may be selected from a group consisting of aluminum oxide, cobalt oxide, chromium oxide, nickel oxide and combinations thereof. Firstly, since the first protective layer made of a metal oxide material has a large resistance, such protective layer can further increase the resistance of the current collector to some extent, thereby further increasing a short-circuit resistance of the battery when the short circuit occurs under abnormal conditions and improving the safety performance of the battery. Secondly, due to small ductility and high hardness of the metal oxide, the first protective layer can further increase the mechanical strength of the current collector. Thirdly, with compared with the protective layer being made of a metal, since the metal oxide has a larger specific surface area than the metal, the bonding force between the protective layer made of the metal oxide material and the conductive layer is stronger, which can play a better role in protecting the conductive layer. Furthermore, the bonding force between the protective layer having an increased specific surface area and the active material layer can be increased. Therefore, especially when the current collector according to the embodiment of the present disclosure is a positive current collector, with compared with a current collector in which the first protective layer is not provided or the first protective layer is made of a metal, the positive current collector according to the embodiment of the present disclosure can further increase the bonding force with the positive active material layer, thereby improving the overall strength of the battery.

The current collector can further include a second protective layer provided on a surface of the conductive layer facing towards the insulation layer. The second protective layer may be made of a metal, metal oxide, or conductive carbon. The metal may be preferably selected from a group consisting of nickel, chromium, nickel-based alloy (such as nickel-chromium alloy), copper-based alloy (such as copper-nickel alloy), and combinations thereof. The nickel-chromium alloy is an alloy made of a metal nickel and a metal chromium. In an example, the mole ratio of nickel element to chromium element is 1:99 to 99:1. The metal oxide may be selected from a group consisting of aluminum oxide, cobalt oxide, chromium oxide, nickel oxide and combinations thereof. Optionally, the conductive carbon may be selected from a group consisting of conductive carbon black, carbon nanotubes, acetylene black, graphene, or combinations thereof.

The second protective layer may be preferably made of the metal oxide.

The second protective layer together with the first protective layer can form a complete supporting structure to protect the conductive layer, thereby better protecting the conductive layer and preventing the conductive layer from being oxidized, corroded or damaged. Moreover, the second protective layer can also improve the bonding force between the insulation layer and the conductive layer, thereby improving the mechanical strength of the current collector.

Since the metal oxide material has a large resistance, the second protective layer of this type can further increase the resistance of the positive current collector to some extent, thereby further increasing a short-circuit resistance of the battery when the short circuit occurs under abnormal conditions and improving the safety performance of the battery. In addition, with compared with the protective layer being made of a metal, since the metal oxide has a larger specific surface area than the metal, the bonding force between the protective layer made of the metal oxide and the conductive layer is stronger. At the same time, due to the larger specific surface area of the metal oxide material, the second protective layer made of the metal oxide material can increase the roughness of the surface of the insulation layer and further increase the bonding force between the conductive layer and the insulation layer, thereby improving the overall strength of the current collector.

Further, the first protective layer has a thickness of D3, where D3 ≦ 0.1D2 and 1nm ≦ D3 ≦ 200nm. Preferably, 10nm ≦ D3 ≦ 50nm. The second protective layer has a thickness of D3', where D3' = 0.1D2 and 1nm ≦ D3' ≦ 200nm. Preferably, 10nm ≦ D3' ≦ 50nm.

Further, the thickness of the first protective layer is greater than the thickness of the second protective layer. That is, a thickness of a protective layer disposed on one surface of the conductive layer facing away from the insulation layer is greater than a thickness of a protective layer disposed on one surface of the conductive layer facing towards the insulation layer.

The thickness of the second protective layer can be minimized, so as to increase the weight energy density of the battery, as long as the second protective layer is thick enough to protect the conductive layer.

Further, as an example, a relationship between the thickness D3' of the second protective layer and the thickness D3 of the first protective layer is: 0.5D3 ≦ D3' ≦ 0.8D3. An increased thickness of the second protective layer has a limited improvement on the safety performance of the battery, but may affect the weight energy density of the battery.

### Insulation Layer

In the current collector according to the embodiments of the present disclosure, the insulation layer mainly serves to support and protect the conductive layer and has a thickness of D1, where 1µm ≦ D1 ≦ 20µm. The insulation layer within such range can lead to the better processing performance without reducing a volume energy density of the battery adopting this current collector.

An upper limit of the thickness D1 of the insulation layer may be 20µm, 15µm, 12µm, 10µm, or 8µm. A lower limit of the thickness D1 of the insulation layer may be 1µm, 1.5µm, 2µm, 3µm, 4µm, 5µm, 6µm, or 7µm. The thickness D1 of the insulation layer is in a range consisting of any one upper limit and any one lower limit, preferably, 2µm ≦ D1 ≦ 10µm, and more preferably, 2µm ≦ D1 ≦ 6µm.

The insulation layer is made of a material selected from a group consisting of an organic polymer insulation material, an inorganic insulation material, a composite material, and combinations thereof. Preferably, the composite material includes an organic polymer insulation material and an inorganic insulation material.

The organic polymer insulation material is selected from a group consisting of polyamide (abbreviated as PA), polyethylene terephthalate (abbreviated as PET), polyimide (abbreviated as PI), polyethylene (abbreviated as PE), polypropylene (abbreviated as PP), polystyrene (abbreviated as PS), polyvinyl chloride (abbreviated as PVC), acrylonitrile butadiene styrene copolymers (abbreviated as ABS), polybutylene terephthalate (abbreviated as PBT), poly-*p*-phenylene terephthamide (abbreviated as PPA), epoxy resin, poly polyformaldehyde (abbreviated as POM), phenol-formaldehyde resin, ethylene propylene rubber (abbreviated as PPE), polytetrafluoroethylene (abbreviated as PTFE), silicone rubber, polyvinylidene fluoride (abbreviated as PVDF), polycarbonate (abbreviated as PC), aramid fiber, polydiformylphenylenediamine, cellulose and derivatives thereof, starch and derivatives thereof, proteins and derivatives thereof, polyvinyl alcohol and crosslinked products thereof, polyethylene glycol and crosslinked products thereof, and combinations thereof.

The inorganic polymer insulation material is selected from a group consisting of Al₂O₃, SiC, SiO₂, and combinations thereof.

The composite material is preferably selected from a group consisting of an epoxy resin glass fiber reinforced composite material, a polyester resin glass fiber reinforced composite material, and combinations thereof.

Preferably, the material of the insulation layer is selected from the organic polymer insulation materials. Since the insulation layer usually has a smaller density than the metal, the current collector according to the present disclosure can improve the weight energy density of the battery while improving the safety performance of the battery. In addition, since the insulation layer can well support and protect the conductive layer located on the surface thereof, a breakage of the electrode, which is common in the conventional current collector, is unlikely to occur.

In order to provide a plurality of holes penetrating through the insulation layer, the conductive layer and the first protective layer in the current collector according to the present disclosure, it is necessary to form a structure having a plurality of hole in the insulation layer in some way, for example Laser Drilling. When the polymer material or the polymer composite material is treated by the laser method, it is possible for the insulation layer made of such material to become sticky and the cutting efficiency is low. Moreover, the increase of the laser power may cause the conductive layer to burn and the insulation layer to melt.

Therefore, preferably, the light transmittance T of the insulation layer satisfies: 0 ≦ T ≦ 98%, preferably 15% ≦ T ≦ 95%, and more preferably 15% ≦ T ≦ 90%. Satisfying the above light transmittance can improve the absorption rate of the insulation layer for the laser energy, thereby leading to high processability and processing efficiency in laser cutting processing, especially high processability and processing efficiency in low power laser cutting processing. The laser power in the laser cutting processing may be, for example, smaller than or equal to 100 W.

A colorant for adjusting light transmittance can be added in the insulation layer, and then the light transmittance of the insulation layer can be adjusted by adjusting the content of the colorant.

The colorant may cause the insulation layer to exhibit a certain degree of black, blue or red, but is not limited thereto. For example, the colorant may cause the insulation layer to exhibit a certain degree of yellow, green, purple, etc.

The colorant may be one or more of an inorganic pigment and an organic pigment.

The inorganic pigment is, for example, one or more of carbon black, cobalt blue, ultramarine blue, iron oxide, cadmium red, chrome orange, molybdenum orange, cadmium yellow, chrome yellow, nickel titanium yellow, titanium white, zinc antimony white, and zinc white.

The organic pigment may be one or more of a phthalocyanine pigment, an azo pigment, an anthraquinone pigment, an indigo pigment, and a metal complex pigment. As an example, the organic pigment may be one or more of plastic red GR, plastic purple RL, light fast yellow G, permanent yellow, rubber red LC, phthalocyanine blue, and phthalocyanine green.

Preferably, the thickness D1 of the insulation layer and the light transmittance T of the insulation layer satisfy:
if 12 µm ≦ D1 ≦ 30 µm, 30% ≦ T ≦ 80%; and/or,
if 8 µ m :S D 1 < 12 µ m, 40% :S T ≦ 90%; and/or,
if 1 µ m :S D1 < 8 µ m, 50% ≦ T ≦ 98%.

### Conductive Layer

In the current collector according to the embodiments of the present disclosure, the conductive layer has a thickness of D2, where 30 nm ≦ D2 ≦ 3 µm, preferably, 300 nm ≦ D2 ≦ 2 µm.

The conductive layer is made of a material selected from a group consisting of a metal conductive material, a carbon-based conductive material, and combinations thereof. The metal conductive material is preferably selected from a group consisting of aluminum, copper, nickel, titanium, silver, nickel-copper alloy, aluminum-zirconium alloy, and combinations thereof. The carbon-based conductive material is preferably selected from a group consisting of graphite, acetylene black, graphene, carbon nanotubes, and combinations thereof.

In the existing lithium-ion batteries, the current collector is made of a copper foil or an aluminum foil. When an internal short circuit occurs in the battery under an abnormal situation, a large current would be instantaneously generated, a large quantity of heat is generated by the short circuit correspondingly. The heat usually further results in aluminothermal reaction at the positive current collector made of an aluminum foil, which can cause the firing, explosion, etc. of the battery.

In the embodiments of the present disclosure, the above technical problems are solved by using a current collector, in which an insulation layer is used to support the conductive layer. Since the insulation layer is non-conductive and the conductive layer is much thinner than the conventional current collector (having a thickness of 9µm to 14µm), the current collector has a relative high resistance. In this way, in the event of the short circuit under abnormal conditions of the battery, a short-circuit resistance can be increased, so that the short-circuit current and the generated short-circuit heat can be greatly reduced, thereby improving the safety performance of the battery.

Generally, the internal resistance of the battery includes ohmic internal resistance of the battery and internal resistance of the battery polarization. The resistances of the active material, current collector and interface, and the electrolyte composition all have a significant influence on the internal resistance of the battery. In the event of the short circuit under abnormal conditions, the internal resistance of the battery will be greatly reduced due to the occurrence of the internal short circuit. Therefore, by increasing the resistance of the current collector, the internal resistance of the battery in the event of the short circuit can be increased, thereby improving the safety performance of the battery.

The thickness of the conductive layer should be sufficient to have effects of conduction and current collection. If the thickness of the conductive layer is too small, the effects of conduction and current collection are too poor, the polarization of the battery can be severe, and the conductive layer is also likely to be damaged during the processing process of the electrode plate. If the thickness of the conductive layer is too great, a weight energy density of the battery can be affected and the resistance of the current collector may be reduced, so that it is not conducive to improving the safety performance of the battery.

An upper limit of the thickness D2 of the conductive layer may be 3µm, 2.8µm, 2.5µm, 2.3µm, 2µm, 1.8µm, 1.5µm, 1.2µm, 1µm, or 900nm. A lower limit of the thickness D2 of the conductive layer may be 800nm, 700nm, 600nm, 500nm, 450nm, 400nm, 350nm, 300nm, 250 nm, 200 nm, 150 nm, 100 nm or 30nm. The thickness of the conductive layer is in a range consisting of any one upper limit and any one lower limit, preferably, 300 nm ≦ D2 ≦ 2 µm, and more preferably, 500nm ≦ D2 ≦ 1.5µm.

The conductive layer can formed on the insulation layer by means of at least one of vapor deposition and electroless plating. With respect to the vapor deposition, physical vapor deposition (PVD) is preferable. Preferably, the physical vapor deposition is at least one of evaporation deposition and sputtering deposition. As regards the evaporation deposition, at least one of vacuum evaporation, thermal evaporation deposition, electron beam evaporation method (EBEM) is preferable. As regards the sputtering deposition, magnetron sputtering is preferable.

The conductive layer may be located not only on at least one surface of the insulation layer but also on wall surfaces of a plurality of holes. The conductive layer may be located either on an entirety or a part of the wall surfaces of the holes. The part of the conductive layer located on the wall surfaces of the plurality of holes and the part of the conductive layer located on at least one surface of the insulation layer may have a same thickness or different thicknesses, and may be made of a same material or different materials. Apart of the conductive layer located on at least one surface of the insulation layer is partially or entirely connected to a part of the conductive layer located on the wall surfaces of the holes.

### Protective layer

When the thickness of the conductive layer is small, it is susceptible to chemical corrosion or mechanical damage. Therefore, the conductive layer includes a first protective layer, and preferably a second protective layer. The protective layer can enhance the mechanical strength of the current collector, and further improve the safety performance of the battery. In addition, the protective layer can effectively prevent the conductive layer from being oxidized, corroded or damaged, thereby significantly improving the long-term reliability and service life of the current collector.

For sake of illustration, in the embodiments of the present disclosure, when the protective layer is arranged on a surface of the conductive layer facing away from the insulation layer (i.e., the upper surface of the conductive layer), it is referred to as a first protective layer, and when the protective layer is arranged on a surface of the conductive layer facing towards the insulation layer (i.e., the lower surface of the conductive layer), it is referred to as a second protective layer.

The first protective layer is made of a metal oxide. Preferably, the second protective layer is also made of a metal oxide.

As an improvement of the current collector according to the embodiments of the present disclosure, the first protective layer has a thickness of D3, which satisfies D3 ≦ 0.1D2 and 1nm ≦ D3 ≦ 200nm. That is, the thickness is smaller than or equal to 1/10D2, and is within a range from 1nm to 200nm. The second protective layer has a thickness of D3', which satisfies D3' ≦ 0.1D2 and 1nm ≦ D3' ≦ 200nm.

The upper limit of the thickness D3/D3' of the protective layer may be 200nm, 180nm, 150nm, 120nm, 100nm, 80nm, 60nm, 55nm, 50nm, 45nm, 40nm, 30nm, or 20nm. The lower limit of the thickness D3/D3' of the protective layer may be 1nm, 2nm, 5nm, 8 nm, 10 nm, 12 nm, 15nm, or 18nm. The thickness D3/ D3' of the protective layer can be in a range of consisting of any one upper limit and any one lower limit. If the protective layer is too thin, it is not enough to protect the conductive layer body; and if the protective layer is too thick, the weight energy density and volume energy density of the battery may be reduced. Preferably, 10nm ≦ D3 ≦ 50nm. Preferably, 10nm ≦ D3' ≦ 50nm.

From the thickness of the protective layer occupying the entire conductive layer, D3 satisfies 1/2000 D2 ≦ D3 ≦ 1/10 D2. That is, the thickness is in a range from 1/2000 D2 to 1/10D2. More preferably, D3 satisfies 1/1000 D2 ≦ D3 ≦ 1/10 D2_{∘} D3' satisfies 1/2000 D2 ≦ D3' = 1/10 D2. That is, the thickness is in a range from 1/2000 D2 to 1/10 D2. More preferably, D'3 satisfies 1/1000 D2 ≦ D3' ≦ 1/10 D2.

As an improvement of the current collector according to the embodiments of the present disclosure, the thickness of the first protective layer is greater than that of the second protective layer. Preferably, 0.5D3 ≦ D3' ≦ 0.8D3.

The protective layer can be formed on the conductive layer body by means of vapor deposition, an in-situ formation method, a coating method, or the like. With respect to the vapor deposition, physical vapor deposition (PVD) is preferable. Preferably, the physical vapor deposition is at least one of evaporation deposition and sputtering deposition. The evaporation deposition is preferably at least one of vacuum evaporating, thermal evaporation deposition, electron beam evaporation method (EBEM). As regards the sputtering deposition, magnetron sputtering is preferable. The in-situ formation method is preferably an in-situ passivation method, i.e., a method for in-situ forming a metal oxide passivation layer on a metal surface. The coating method is preferably one of roll coating, extrusion coating, blade coating, gravure coating, and the like.

The thickness of the first protective layer may be the same as or different from the thickness of the second protective layer.

The protective layer may be located only on one surface of the conductive layer or on two surfaces of the conductive layer. The protective layer may be disposed only on a planar portion of the current collector, or may be disposed on a planar portion of the current collector and on wall surfaces of a plurality of holes.

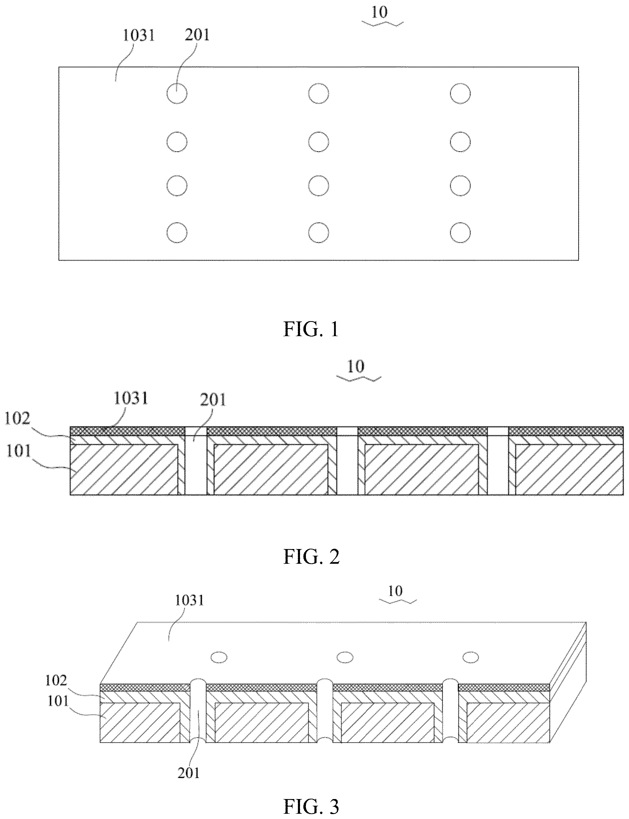

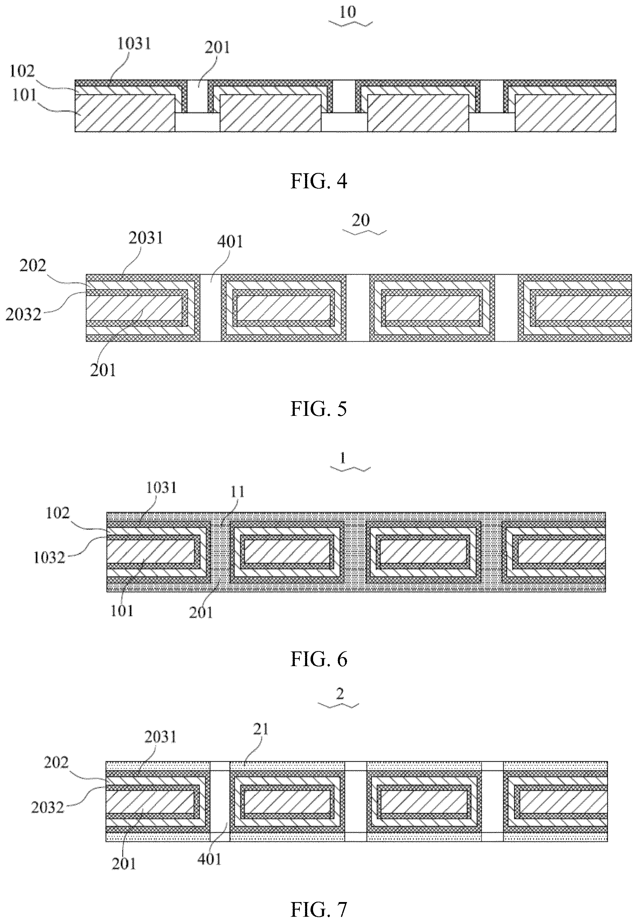

FIGs. 1-4 are schematic structural diagrams of positive current collectors according to the embodiments of the present disclosure, FIG. 5 is a schematic structural diagram of a negative current collector according to the embodiments of the present disclosure, FIG. 6 is a schematic structural diagram of a positive electrode plate according to the embodiments of the present disclosure, and FIG. 7 is a schematic structural diagram of a negative electrode plate according to the embodiments of the present disclosure.

Referring to FIGs. 1-3, the positive current collector 10 includes a positive insulation layer 101, a first protective layer 1031 and a positive conductive layer 102 arranged between the positive insulation layer 101 and the first protective layer 1031. That is, the positive conductive layer 102 is provided on one surface of the positive insulation layer 101, and the first protective layer 1031 is provided on a surface of the positive conductive layer 102 facing away from the positive insulation layer 101. The positive current collector 10 is provided with a plurality of holes 201 penetrating through the positive insulation layer 101, the positive conductive layer 102 and the first protective layer 1031, and the positive conductive layer 102 is also formed on all wall surfaces of the holes 201.

In FIG. 4, the positive current collector 10 includes a positive insulation layer 101, a first protective layer 1031 and a positive conductive layer 102 arranged between the positive insulation layer 101 and the first protective layer 1031. That is, the positive conductive layer 102 is provided on one surface of the positive insulation layer 101, and the first protective layer 1031 is provided on a surface of the positive conductive layer 102 facing away from the positive insulation layer 101. The positive current collector 10 is provided with a plurality of holes 201 penetrating through the positive insulation layer 101, the positive conductive layer 102 and the first protective layer 1031, and the positive conductive layer 102 and the first protective layer 1031 are also located on a part of wall surfaces of the holes 201. Moreover, a part of the positive conductive layer 102 located on the insulation layer 101 is connected to a part of the positive conductive layer 102 located on the wall surfaces of the holes.

In FIG. 5, the negative current collector 20 includes a negative insulation layer 201, a negative conductive layer 202, a first protective layer 2031 and a second protective layer 2032. The negative conductive layer 202 is arranged on two opposite surfaces of the negative insulation layer 201. The first protective layer 2031 is provided on a surface of each negative conductive layer 202 facing away from the negative insulation layer 201. The second protective layer 2032 is provided on a surface of each negative conductive layer 202 facing towards the negative insulation layer 201. The negative current collector 20 is provided with a plurality of holes 401 penetrating through the negative insulation layer 201, the negative conductive layer 202, the first protective layer 2031 and the second protective layer 2032. The negative conductive layer 202, the first protective layer 2031 and the second protective layer 2032 are also located on all wall surfaces of the holes 401. Moreover, a part of the negative conductive layer 202 located on the negative insulation layer 201 is connected to a part of the negative conductive layer 202 located on the wall surfaces of the holes.

The second aspect of the present disclosure provides an electrode plate. The electrode plate includes the current collector according to the first aspect of the present disclosure and an electrode active material layer formed on a surface of the current collector.

FIG. 6 is a schematic structural diagram of a positive electrode plate according to an embodiment of the present disclosure. As shown in FIG. 6, the positive electrode plate 1 includes a positive current collector and a positive active material layer 11 formed on surfaces of the positive current collector 10. The positive current collector includes a positive insulation layer 101, a positive conductive layer 102, a first protective layer 1031 and a second protective layer 1032. The positive conductive layer 102 is provided on two opposite surfaces of the positive insulation layer 101. The first protective layer 1031 is provided on a surface of each positive conductive layer 102 facing away from the positive insulation layer 101. The second protective layer 1032 is provided on a surface of each positive conductive layer 102 facing towards the positive insulation layer 101. The positive current collector 10 is provided with a plurality of holes 201 penetrating through the positive insulation layer 101, the positive conductive layer 102, the first protective layer 1031, the second protective layer 1032 and the positive active material layer 11. The positive conductive layer 102, the first protective layer 1031 and the second protective layer 1032 are also located on all wall surfaces of the plurality of holes 201, and a part of the conductive layer 102 located on the insulation layer 101 is connected to a part of the conductive layer 102 located on the wall surfaces of the holes. The positive active material layer 11 is further filled in the plurality of holes 201.

FIG. 7 is a schematic structural diagram of a negative electrode plate according to an embodiment of the present disclosure. As shown in FIG. 7, the negative electrode plate 2 includes a negative current collector and a negative active material layer 21 formed on surfaces of the negative current collector. The negative current collector includes a negative insulation layer 201, a negative conductive layer 202, a first protective layer 2031 and a second protective layer 2032. The negative conductive layer 202 is arranged on two opposite surfaces of the negative insulation layer 201. The first protective layer 2031 is provided on a surface of each negative conductive layer 202 facing away from the negative insulation layer 201. The second protective layer 2032 is provided on a surface of each negative conductive layer 202 facing towards the negative insulation layer 201. The negative current collector is provided with a plurality of holes 401 penetrating through the negative insulation layer 201, the negative conductive layer 202, the first protective layer 2031, the second protective layer 2032 and the negative active material layer 21. The negative conductive layer 202, the first protective layer 2031 and the second protective layer 2032 are also located on all wall surfaces of the holes 401. Moreover, a part of the conductive layer 202 located on the insulation layer 201 is connected to a part of the conductive layer 202 located on the wall surfaces of the holes.

It should be noted that FIGs. 1-7 are merely illustrative, and sizes, shapes and arrangements of the holes in the drawings are all illustrative.

It would be appreciated that when the conductive layer is arranged on both two opposite surfaces of the insulation layer, the current collector is coated with the active material on its two surfaces and the manufactured positive or negative electrode plates can be directly applied in the electrochemical device, and when the conductive layer is arranged on one surface of the insulation layer, the current collector is coated with the active material on its one surface and the manufactured positive or negative electrode plates can be applied in the battery after being folded.

In an example, the electrode active material layer is formed on at least one surface of the current collector, and can be entirely or partially filled in the plurality of holes of the current collector. Moreover, the electrode active material layer formed on at least one surface of the current collector and the electrode active material layer filled in the plurality of holes of the current collector are connected to each other. In this way, the bonding force between the electrode active material layer and the current collector is stronger, and the long-term reliability and service life of the electrode plate and the battery can be improved. In addition, since the electrode active material layer has a certain porosity, such arrangement can have better electrolyte wettability and smaller polarization for the electrode plate.

The embodiments of the present disclosure also provide an electrochemical device. The electrochemical device includes a positive electrode plate, a separator and a negative electrode plate. The electrochemical device can be a wound type or a laminated type battery, such as one of a lithium ion secondary battery, a primary lithium battery, a sodium ion battery, or a magnesium ion battery. However, it is not limited to these batteries.

The positive electrode plate and/or the negative electrode plate are the electrode plate according to the above embodiments of the present disclosure.

As an example, the positive electrode plate of the battery according to the present disclosure employs the electrode plate according to the present disclosure. Since the conventional current collector has a high aluminum content, when the short circuit occurs under the abnormal condition of the battery, the heat generated at the short-circuit point can cause a severe aluminothermal reaction, which generates a huge amount of heat and further causes the explosion or other accidents of the battery. When the battery adopts the positive electrode plate according to the present disclosure, the aluminothermal reaction can be avoided due to the greatly reduced aluminum content in the positive current collector, thereby significantly improving the safety performance of the battery. The current collector is provided with a plurality of holes penetrating through the insulation layer and the conductive layer, thereby facilitating the electrolyte passing through, improving wettability of the electrolyte based on electrodes of the current collector, reducing polarization of the electrodes and the battery and improving electrochemical properties of the battery such as properties of charge-discharge at high rate and cycle life. Moreover, providing the plurality of holes in the current collector can further reduce the weight of the current collector and increase the weight energy density of the battery.

In the present disclosure, a nailing experiment is used to simulate the abnormal conditions of the battery and observe a change of the battery after the nailing. A nailing experiment lies in that a nail penetrates the entire battery, which generally includes a plurality of layers of positive electrode plate 1, a plurality of layers of separator 3 and a plurality of layers of negative electrode plate 2. When a short circuit occurs in the battery due to the nailing, the short-circuit current is greatly reduced, and the heat generated during the short circuit is controlled within a range that the battery can fully absorb. Therefore, the heat generated at the position where the internal short-circuit occurs can be completely absorbed by the battery, and the increase in temperature is also very small, so that the damage on the battery caused by the short circuit can be limited to the nailing position, and only a "point break" can be formed without affecting the normal operation of the battery in a short time.

### Embodiments

### 1. Preparation of an insulation layer having a specific light transmittance

The insulation layer is made of PET. A certain amount of colorant carbon black is added to the PET and uniformly mixed therein. Then, the PET is subjected to extrusion casting, cold rolling, and biaxial stretching in a hot melt state to obtain an insulation layer having a specific light transmittance.

### 2. Preparation of Current Collector

2.1 An insulation layer having a certain thickness is selected, perforation is performed in the insulation layer to form holes, and then a conductive layer having a certain thickness is formed by means of vacuum evaporation in such a manner that the conductive layer is deposited on at least one surface of the insulation layer and the wall surfaces of the holes.

2.2 An insulation layer having a certain thickness is selected, a conductive layer having a certain thickness is formed by means of vacuum evaporation on a surface of the insulation layer, and then perforation is performed to form holes penetrating through the insulation layer and the conductive layer.

2.3 An insulation layer having a certain thickness is selected, perforation is performed to form holes, and then a conductive layer is deposited on the plane surface and the wall surfaces of the holes or on the wall surfaces of the holes and the plane surface.

The conditions of the vacuum evaporation for forming the conductive layer are as follows: the insulation layer is placed in a vacuum evaporation chamber after a surface cleaning treatment, a high-purity metal wire in a metal evaporation chamber is melted and evaporated at a high temperature in a range of 1600°C to 2000°C, the evaporated metal passes through a cooling system in the vacuum evaporation chamber and is finally deposited on a surface of the insulation layer, so as to form the conductive layer.

### 3. Preparation of current collector having protective layer

### 3.1 Formation of first protective layer

On a surface of a current collector having a conductive layer, a protective layer is formed on a surface of the conductive layer facing away from the insulation layer by means of vapor deposition, in-situ formation, or coating.

### 3.2 Formation of second protective layer

A protective layer is formed on a surface of the insulation layer by means of vapor deposition or coating, and then a conductive layer having a certain thickness is formed on the surface of the insulation layer having the protective layer disposed thereon by means of vacuum evaporation, so as to prepare a current collector having a second protective layer. In addition, on the basis of the above, a first protective layer may be further formed on an upper surface of the conductive layer.

It is possible to form the holes before or after formation of the protective layer(s).

In the embodiments of preparation, the vapor deposition is vacuum evaporation, the in-situ formation is in-situ passivation, and the coating is gravure coating.

The conditions of the vacuum evaporation are as follows: a sample is placed in a vacuum evaporation chamber after a surface cleaning treatment, a material of the protective layer in the evaporation chamber is melted and evaporated at a high temperature in a range of 1600 °C to 2000 °C, and the evaporated material of the protective layer passes through a cooling system in the vacuum evaporation chamber and is finally deposited on a surface of the sample, so as to form the protective layer.

The conditions of the in-situ passivation are as follows: the conductive layer body is placed in a high-temperature oxidizing environment, the temperature is controlled within a range of 160 °C to 250 °C, and the oxygen supply is maintained in the high-temperature environment, and processing time is 30 min, so as to form a protective layer of metal oxide.

The conditions of the gravure coating are as follows: a material of the protective layer and NMP are stirred and mixed, then the slurry of the above material of the protective layer (solid material content is 20% to 75%) is coated on a surface of the sample, the thickness of the coating is controlled by a gravure roll, and finally the coating is dried at 100 to 130 °C.

### 4. Preparation of Electrode Plate

Positive slurry or negative slurry is coated on a surface of the current collector by a conventional coating process of battery and dried at 100°C, so as to obtain a positive electrode plate or a negative electrode plate.

Conventional positive electrode plate: current collector is an Al foil with a thickness of 12µm, and the electrode active material layer is a ternary (NCM) material layer having a certain thickness.

Conventional negative electrode plate: current collector is a Cu foil with a thickness of 8µm, and the electrode active material layer is a graphite layer with having a certain thickness.

In some embodiments, the electrode active material layer is disposed only in a planar portion of the current collector. In some embodiments, the electrode active material layer is disposed in a planar portion of the current collector and in the holes.

The specific parameters of the prepared current collector and its electrode plates are shown in Table 1. Parameters of the insulation layer, the conductive layer and the electrode active material parameters of the current collector of Electrode Plates 1 to 8 are shown in Table 1, in which the conductive layer is disposed on the upper surface and the lower surface of the insulation layer, and the conductive layer is formed by means of vacuum evaporation. "Surface only" means that the current collector is provided with a plurality of holes penetrating through the insulation layer and the conductive layer, and the conductive layer is disposed only on the upper surface and the lower surface of the insulation layer. "Surface and holes" means that the current collector is provided with a plurality of holes penetrating through the insulation layer and the conductive layer, the conductive layer is disposed not only on the upper surface and the lower surface of the insulation layer but also on all wall surfaces of the holes, and a part of the conductive layer formed on the wall surfaces of the holes is connected to a part of the conductive layer formed on the surface of the insulation layer. The holes are circular and have an aperture of 0.01mm, the area ratio of the holes is selected to be 5%, and a spacing between two of the holes is 0.2mm. The electrode active material is filled in a plurality of holes.

### 5. Preparation of Battery:

According to a conventional battery preparing process, a positive electrode plate (compaction density: 3.4g/cm³), a PP/PE/PP separator and a negative electrode plate (compaction density: 1.6 g/cm³) together are winded to form a bare cell, then the bare cell is placed into a battery case, an electrolyte (EC:EMC in a volume ratio of 3:7, LiPF₆: 1mol/L) is injected into the case, following by sealing, formation, and the like, so as to obtain a lithium-ion secondary battery.

Specific compositions of the batteries prepared in the embodiments of the present disclosure and the batteries of the Comparative Examples are shown in Table 2.

First, the technical effect of the holes will be described by the embodiments.

**Table 1**

| Electrode Plate No. | Insulation Layer | | Conductive Layer | | With or without holes | Protective Layer | States of holes | Electrode active material layer | |
|---|---|---|---|---|---|---|---|---|---|
| | Material | D1 | Material | D2 | | | | Material | Thickness |
| Electrode Plate 1 | PI | 6µm | Al | 2µm | Withou t holes | No | / | NCM | 55µm |
| Electrode Plate 2 | PET | 1µm | Al | 30nm | With holes | No | Surfac e only | LCO | 55µm |
| Electrode Plate 3 | PI | 2µm | Al | 300nm | With holes | No | Surfac e and holes | NCM | 55µm |
| Electrode Plate 4 | PET | 10µm | Al | 500nm | With holes | No | Surfac e and holes | NCM | 55µm |
| Electrode Plate 5 | PET | 8µm | Ni | 800nm | With holes | No | Surfac e and holes | NCM | 55µm |
| Electrode Plate 6 | PI | 20µm | Al | 1µm | With holes | No | Surfac e and holes | NCM | 55µm |
| Electrode Plate 7 | PET | 6µm | Al | 1.5µm | With holes | No | Surfac e and holes | NCM | 55µm |
| Electrode Plate 8 | PET | 6µm | Al | 2µm | With holes | No | Surfac e and holes | NCM | 55µm |

**Table 2**

| Battery No. | Composition of Electrodes | |
|---|---|---|
| Battery 1 | conventional positive electrode plate | conventional negative electrode plate |
| Battery 2 | electrode plate 1 | conventional negative electrode plate |
| Battery 3 | electrode plate 2 | conventional negative electrode plate |
| Battery 4 | electrode plate 3 | conventional negative electrode plate |
| Battery 5 | electrode plate 4 | conventional negative electrode plate |
| Battery 6 | electrode plate 5 | conventional negative electrode plate |
| Battery 7 | electrode plate 6 | conventional negative electrode plate |
| Battery 8 | electrode plate 7 | conventional negative electrode plate |
| Battery 9 | electrode plate 8 | conventional negative electrode plate |

### Experimental Examples:

### 1. Test Methods of Cycle Life of Battery:

A method for testing cycle life of the lithium-ion battery was performed as follows.

A lithium-ion battery was charged and discharged at 25 °C and 45 °C, respectively, i.e., the battery was firstly charged with a current of 1C to a voltage of 4.2V, then was discharged with a current of 1C to a voltage of 2.8V, and the discharge capacity after a first cycle was recorded; and the battery was charged and discharged for 1000 cycles as above, and the discharge capacity of the battery after a 1000^{th} cycle was recorded. A capacity retention rate after the 1000^{th} cycle was obtained by dividing the discharge capacity after the 1000^{th} cycle by the discharge capacity after the first cycle.

The experimental results are shown in Table 3.

### 2. Test Methods of Nailing Experiment:

Nailing Experiment: a battery that had been fully charged was fixed, a steel needle with a diameter of 8mm punctured through the battery at a speed of 25mm/s at room temperature and remained in the battery, and the battery was observed and measured after the nailing was finished.

Measurement of Battery Temperature: a multichannel thermometer was used, and the temperature sensing wires were respectively attached on geometric centers of a nail-inserting surface and an opposite surface of the battery to be nailed; after the nailing was finished, temperature of the battery was measured and tracked for 5 minutes, and the temperatures of the battery at the end of 5 minutes were recorded.

Measurement of Battery Voltage: positive and negative electrodes of each battery to be nailed were connected to test terminals of an internal resistance instrument; after the nailing was finished, voltage of each battery was measured and tracked for 5 minutes, and the voltage of the battery at the end of 5 minutes was recorded.

Data of the recorded temperatures and voltages of the batteries are shown in Table 4.

### 3. Test Methods of Bonding Force between Conductive Layer and Insulation Layer

The electrode plate was immersed in a mixed solvent of dimethyl carbonate and hydrofluoric acid, in which content of the hydrofluoric acid was 0.1 wt%, and then was vacuum-sealed and stored in a 70°C incubator for several days. After the storage, the electrode plate was taken out, and folded in half along a length direction. At the same time, a 2Kg weight was placed on the fold to compact it for 10 seconds. After the compaction, the electrode plate was flattened and then observed to see if the conductive layer peels off at the fold, and the number of days for which the electrode plate had been stored before the peeling off started to appear was recorded. The test results are shown in Table 5.

### 4. Test of Light Transmittance of Support Layer

The LS117 light transmittance meter was used to test a light transmittance of a support layer according to GB2410-80 standard. Firstly, the instrument was started up and self-calibrated, and then the interface displayed T=100%, i.e., calibration was OK. Then, the support layer sample was sandwiched between a probe and a receiver. The interface automatically displayed a value of the light transmittance of the support layer.

### 5. Test of Cutting Performance of Current Collector

The IPG's YLP-V2-1-100-100-100 fiber laser was adopted, for which the power was set to 100 W and the frequency was set to 150 kHz. The current collector was installed on a cutting device of the laser and then was cut, so as to measure the maximum cut-off speed of the current collector. The maximum cut-off speed of the current collector refers to the maximum cutting speed that can be achieved by laser cutting the current collector without adhesive bonding.

**Table 3**

| Battery No. | Capacitance Retention Rate at the 1000^{th} Cycle | |
|---|---|---|
| | 25 °C | 45 °C |
| Battery 1 | 87.9% | 83.2% |
| Battery 2 | 81.3% | 78.1% |
| Battery 3 | 84.6% | 80.2% |
| Battery 4 | 86.7% | 81.5% |
| Battery 5 | 87.9% | 82.1% |
| Battery 6 | 88.0% | 83.2% |
| Battery 7 | 87.8% | 82.8% |
| Battery 8 | 88.0% | 82.6% |
| Battery 9 | 87.8% | 82.4% |

**Table 4**

| Battery No. | Nailing Experiment | |
|---|---|---|
| | Battery Temperature Rise (°C) | Battery Voltage (V) |
| Battery 1 | N/A | N/A |
| Battery 2 | 17.2 | 3.85 |
| Battery 3 | 2.3 | 4.13 |
| Battery 4 | 2.9 | 4.13 |
| Battery 5 | 5.0 | 4.11 |
| Battery 6 | 5.6 | 4.10 |
| Battery 7 | 8.9 | 3.97 |
| Battery 8 | 11.7 | 3.91 |
| Battery 9 | 14.1 | 3.89 |

| | | |
|---|---|---|
| "N/A" indicates that thermal runaway and damage happened immediately after a steel needle punctured through the battery. | | |

**Table 5**

| Electrode Plate No. | Number of Days |
|---|---|
| Electrode Plate 1 | 10 |
| Electrode Plate 2 | 18 |
| Electrode Plate 3 | >30 |
| Electrode Plate 4 | >30 |
| Electrode Plate 5 | >30 |
| Electrode Plate 6 | >30 |
| Electrode Plate 7 | >30 |
| Electrode Plate 8 | >30 |

From the results in Table 4, it can be seen that, as regards Battery 1 formed by adopting the conventional positive electrode plate and the conventional negative electrode plate), the temperature increased abruptly by hundreds of degree Celsius and the voltage dropped abruptly to zero at the moment of nailing. This shows that an internal short circuit occurred at the moment of nailing, a large amount of heats was generated, a thermal runaway and damage of the battery instantly occurred, so that the battery is unable to continue operating.

Compared with a battery formed by a conventional positive electrode plate and a conventional negative electrode plate, the composite current collector according to the present disclosure can greatly improve the safety performance of the battery, and the smaller thickness of the conductive layer can lead to the more obvious improvement effect on safety. In addition, the composite current collector with holes may be more conductive to an improvement in safety performance as compared to a composite current collector without holes.

It can be seen from the results in Table 3 that, compared with the battery adopting the conventional positive electrode plate and the conventional negative electrode plate, the batteries adopting the current collectors according to the embodiments of the present disclosure have a good cycle performance, which is equivalent to the cycle performance of a conventional battery. This shows that the current collectors according to the embodiments of the present disclosure do not have any significantly adverse influence on the resulting electrode plates and batteries.

It can be seen from the results in Table 5 that in the composite current collector having holes, the bonding force between the conductive layer and the insulation layer is significantly enhanced with respect to the composite current collector without holes. In particular, when the conductive layer is disposed on the surface of the insulation layer and the wall surfaces of the plurality of holes, the conductive layer firmly "grips" the insulation layer from at least one surface of the insulation layer and the plurality of holes. The bonding between the insulation layer and the conductive layer is not limited to the plane direction, but also the depth direction, which can strengthen the bonding force between the conductive layer and the insulation layer, thereby improving the long-term reliability and service life of the current collector.

Secondly, the technical effects of the first protective layer and the optional second protective layer will be illustrated by the embodiments.

**Table 6**

| Electrode plate No. | Second protection layer | | First protection layer | | Formation of protective layer |
|---|---|---|---|---|---|
| | Material | D3' | Material | D3 | |
| Electrode plate 5-1 | / | / | Nickle oxide | 1 nm | Vaccum evaporation |
| Electrode plate 5-2 | / | / | Nickle oxide | 10nm | Vaccum evaporation |
| Electrode plate 5-3 | / | / | Aluminium oxide | 50 nm | Vaccum evaporation |
| Electrode plate 8-4 | / | / | Nickle oxide | 200nm | Vaccum evaporation |
| Electrode plate 5-5 | Nickle oxide | 5nm | Nickle oxide | 10nm | Vaccum evaporation |
| Electrode plate 5-6 | Nickle oxide | 8nm | Nickle oxide | 10nm | Vaccum evaporation |
| Electrode plate 5-7 | Nickle oxide | 20nm | Nickle oxide | 50nm | Vaccum evaporation |
| Electrode plate 8-8 | Nickle oxide | 30nm | Nickle oxide | 50nm | Vaccum evaporation |
| Electrode plate 8-9 | Nickle oxide | 50nm | Nickle oxide | 100nm | Vaccum evaporation |
| Electrode plate 8-10 | Aluminium oxide | 100nm | Nickle oxide | 200nm | Vaccum evaporation |

| | | | | | |
|---|---|---|---|---|---|
| The symbol "/" indicates that no protective layer is arranged. | | | | | |

**Table 7**

| Battery No. | Composition of Electrodes | |
|---|---|---|
| Battery 11 | Electrode plate 5-1 | conventional negative electrode plate |
| Battery 12 | Electrode plate 5-2 | conventional negative electrode plate |
| Battery 13 | Electrode plate 5-3 | conventional negative electrode plate |
| Battery 14 | Electrode plate 8-4 | conventional negative electrode plate |
| Battery 15 | Electrode plate 5-5 | conventional negative electrode plate |
| Battery 16 | Electrode plate 5-6 | conventional negative electrode plate |
| Battery 17 | Electrode plate 5-7 | conventional negative electrode plate |
| Battery 18 | Electrode plate 8-8 | conventional negative electrode plate |
| Battery 19 | Electrode plate 8-9 | conventional negative electrode plate |
| Battery 20 | Electrode plate 8-10 | conventional negative electrode plate |

**Table 8**

| Battery No. | Capacitance Retention Rate at the 1000^{th} Cycle | |
|---|---|---|
| | 25 °C | 25 °C |
| Battery 11 | 88.1% | 83.3% |
| Battery 12 | 88.6% | 83.6% |
| Battery 13 | 89.1% | 86.6% |
| Battery 14 | 87.9% | 82.6% |
| Battery 15 | 88.6% | 83.2% |
| Battery 16 | 88.9% | 85.6% |
| Battery 17 | 89.1% | 85.7% |
| Battery 18 | 89.2% | 86.1% |
| Battery 19 | 88.3% | 83.9% |
| Battery 20 | 89.3% | 86.5% |

Compared with the current collector without the protective layer, the capacitance retention rate of the battery formed by the current collector having the protective layer according to the embodiment of the present disclosure can be further improved, indicating that the reliability of the battery is better.

The examples will be exemplified below to illustrate the effect of light transmittance on the laser processability of the insulation layer. Here, a current collector without holes is used for explanation, referring to Table 9.

**Table 9**

| No. | Conductive Layer | | Insulation Layer | | | | | Maximum cut-off speed m/min |
|---|---|---|---|---|---|---|---|---|
| | Material | D2 µm | Material | D1 µm | Colorant | light transmittance% | With or without holes | |
| Current Collector 11 | Al | 0.03 | PET | 1 | carbon black | 98 | Without holes | 30 |
| Current Collector 12 | Al | 0.3 | PET | 6 | carbon black | 92 | Without holes | 36 |
| Current Collector 13 | Al | 1 | PET | 6 | carbon black | 87 | Without holes | 50 |
| Current Collector 14 | Al | 1 | PET | 10 | carbon black | 96 | Without holes | 20 |
| Current Collector 15 | Al | 1 | PET | 10 | cadmium red | 55 | Without holes | 80 |
| Current Collector 16 | Al | 1.5 | PET | 15 | cobalt blue | 80 | Without holes | 30 |
| Current Collector 17 | Al | 2 | PET | 15 | carbon black | 54 | Without holes | 60 |
| Current Collector 18 | Al | 2 | PET | 20 | carbon black | 45 | Without holes | 55 |
| Current Collector 19 | Al | 3 | PET | 30 | carbon black | 40 | Without holes | 50 |
| Current Collector 20 | Al | 0.03 | PET | 30 | carbon black | 40 | Without holes | 55 |
| Comparative Current Collector | Al | 1 | PET | 10 | / | 100 | Without holes | 15 |

It can be seen that, in the case where the thickness of the insulation layer is the same, reducing the light transmittance of the insulation layer can significantly increase the cutting speed of the current collector under the low-power laser cutting processing without causing adhesive bonding, so that the cutting performance and cutting rate of the current collector during the laser cutting processing can be significantly improved.

The preferable embodiments of the present disclosure are disclosed above but are not used to limit the claims. Those skilled in the art may make possible changes and modifications without departing from the concept of the present disclosure. Therefore, the protection scope of the present disclosure is defined by the attached claims.

## Claims

1. A current collector (10, 20), comprising
an insulation layer (101, 201);
a conductive layer (102, 202) at least located on at least one surface of the insulation layer (101, 201); and
a first protective layer (1031, 2031) provided on a surface of the conductive layer (102, 202) facing away from the insulation layer (101, 201),
wherein the current collector (10, 20) is provided with a plurality of holes (201, 401) penetrating through the insulation layer (101, 201), the conductive layer (102, 202) and the first protective layer (1031, 2031), and
the first protective layer (1031, 2031) is made of a metal oxide,
**characterized in that** the insulation layer (101, 201) is added with a colorant for adjusting a light transmittance T of the insulation layer (101, 201), and the light transmittance T of the insulation layer (101, 201) satisfies: 0 ≦ T ≦ 98%, wherein the light transmittance was measured by a method according to the description.

2. The current collector (10, 20) according to claim 1, further comprising a second protective layer (1032, 2032) provided on a surface of the conductive layer (102, 202) facing towards the insulation layer (101, 201), wherein the second protective layer (1032, 2032) is made of a metal, a metal oxide, or a conductive carbon,
the first protective layer (1031, 2031) has a thickness of D3, and the second protective layer (1032, 2032) has a thickness of D3', and
D3 is greater than D3', 0.5D3 ≦ D3' = 0.8D3.

3. The current collector (10, 20) according to claim 1, wherein the conductive layer (102, 202) is further arranged on wall surfaces of the plurality of holes (201, 401), and a part of the conductive layer (102, 202) located on the at least one surface of the insulation layer (101, 201) is partially or entirely connected to a part of the conductive layer (102, 202) located on the wall surfaces of the plurality of holes (201, 401).

4. The current collector (10, 20) according to claim 3, wherein the at least one surface of the insulation layer (101, 201) comprises an upper surface and a lower surface of the insulation layer (101, 201), and a part of the conductive layer (102, 202) located on the upper surface and the lower surface of the insulation layer (101, 201) is partially or entirely connected to the part of the conductive layer (102, 202) located on the wall surfaces of the plurality of holes (201, 401).

5. The current collector (10, 20) according to claim 3 or 4, wherein each of the plurality of holes (201, 401) has an aperture in a range from 0.001mm to 3mm, an area ratio of the plurality of holes (201, 401) to an entire surface of the conductive layer (102, 202) located on one surface of the insulation layer (101, 201) is 0.1% to 30%, and two adjacent holes (201, 401) of the plurality of holes (201, 401) have a spacing in a range from 0.2mm to 5mm with respect to each other.

6. The current collector (10, 20) according to any one of claims 1 to 5, **characterized in that** the insulation layer (101, 201) is added with a colorant for adjusting a light transmittance T of the insulation layer (101, 201), and the light transmittance T of the insulation layer (101, 201) satisfies: 15% ≦ T ≦ 95%.

7. The current collector (10, 20) according to any one of claims 1 to 5, **characterized in that** the insulation layer (101, 201) is added with a colorant for adjusting a light transmittance T of the insulation layer (101, 201), and the light transmittance T of the insulation layer (101, 201) satisfies: 15 %≦ T ≦ 90%.

8. The current collector (10, 20) according to any one of claims 1 to 7, **characterized in that** the metal oxide is selected from a group consisting of aluminum oxide, cobalt oxide, chromium oxide, nickel oxide, and combinations thereof.

9. The current collector (10, 20) according to any one of claims 1 to 8, **characterized in that** the metal is selected from a group consisting of nickel, chromium, nickel-based alloy, copper-based alloy and combinations thereof, the metal oxide is preferably selected from a group consisting of aluminum oxide, cobalt oxide, chromium oxide, nickel oxide and combinations thereof, and the conductive carbon is selected from a group consisting of conductive carbon black, carbon nanotubes, acetylene black, graphene and combinations thereof.

10. The current collector (10, 20) according to any one of claims 1 to 9, **characterized in that** the second protective layer (1032, 2032) is made of the metal oxide.

11. The current collector (10, 20) according to any of claims 1 to 10, **characterized in that** the conductive layer (102, 202) has a thickness of D2,
D3 ≦ 0.1D2 and 1nm ≦ D3 ≦ 200nm, and
D3' ≦ 0.1D2 and 1nm ≦ D3' ≦ 200nm.

12. The current collector (10, 20) according to any of claims 1 to 11, **characterized in that** 10nm ≦ D3 ≦ SOnm, and 10nm ≦ D3' ≦ 50nm.

13. The current collector (10, 20) according to any one of claims 1 to 12, **characterized in that** the conductive layer (102, 202) has a thickness of D2, 30 nm ≦ D2 ≦ 3 µm.

14. An electrode plate, **characterized in** comprising the current collector (10, 20) according to any one of claims 1 to 13 and an electrode active material layer (11, 21) at least formed on at least one surface of the current collector (10, 20).

15. An electrochemical device, **characterized in** comprising a positive electrode plate (1), a separator, and a negative electrode plate (2), wherein the positive electrode plate (1) and/or the negative electrode plate (2) is the electrode plate according to claim 14.

## Patentansprüche

1. Stromabnehmer (10, 20), umfassend
eine Isolierschicht (101, 201);
eine leitfähige Schicht (102, 202), die mindestens auf mindestens einer Fläche der Isolierschicht (101, 201) liegt; und
eine erste Schutzschicht (1031, 2031), die auf einer Fläche der leitfähigen Schicht (102, 202) von der Isolierschicht (101, 201) weg gerichtet bereitgestellt ist,
wobei der Stromabnehmer (10, 20) mit einer Vielzahl von Löchern (201, 401) versehen ist, die durch die Isolierschicht (101, 201), die leitfähige Schicht (102, 202) und die erste Schutzschicht (1031, 2031) hindurch verlaufen, und
die erste Schutzschicht (1031, 2031) aus einem Metalloxid hergestellt ist,
**dadurch gekennzeichnet, dass** die Isolierschicht (101, 201) mit einem Farbstoff zum Anpassen einer Lichtdurchlässigkeit T der Isolierschicht (101, 201) hinzugefügt wird, und die Lichtdurchlässigkeit T der Isolierschicht (101, 201) Folgendem entspricht: 0 ≤ T ≤ 98 %, wobei die Lichtdurchlässigkeit durch ein Verfahren gemäß der Beschreibung gemessen wurde.

2. Stromabnehmer (10, 20) nach Anspruch 1, ferner umfassend eine zweite Schutzschicht (1032, 2032), die auf einer Fläche der leitfähigen Schicht (102, 202) bereitgestellt ist, die zu der Isolierschicht (101, 201) gerichtet ist, wobei die zweite Schutzschicht (1032, 2032) aus einem Metall, einem Metalloxid oder einem leitfähigen Kohlenstoff hergestellt ist,
wobei die erste Schutzschicht (1031, 2031) eine Dicke von D3 aufweist und die zweite Schutzschicht (1032, 2032) eine Dicke von D3' aufweist, und
D3 größer als D3' ist, 0,5D3 ≤ D3' ≤ 0,8D3.

3. Stromabnehmer (10, 20) nach Anspruch 1, wobei die leitfähige Schicht (102, 202) ferner auf Wandflächen der Vielzahl von Löchern (201, 401) angeordnet ist und ein Teil der leitfähigen Schicht (102, 202), der auf der mindestens einen Fläche der Isolierschicht (101, 201) liegt, teilweise oder vollständig mit einem Teil der leitfähigen Schicht (102, 202) verbunden ist, der auf den Wandflächen der Vielzahl von Löchern (201, 401) liegt.

4. Stromabnehmer (10, 20) nach Anspruch 3, wobei die mindestens eine Fläche der Isolierschicht (101, 201) eine obere Fläche und eine untere Fläche der Isolierschicht (101, 201) umfasst und ein Teil der leitfähigen Schicht (102, 202), der auf der oberen Fläche und der unteren Fläche der Isolierschicht (101, 201) liegt, teilweise oder vollständig mit dem Teil der leitfähigen Schicht (102, 202) verbunden ist, der auf den Wandflächen der Vielzahl von Löchern (201, 401) liegt.

5. Stromabnehmer (10, 20) nach Anspruch 3 oder 4, wobei jedes der Vielzahl von Löchern (201, 401) eine Öffnung in einem Bereich von 0,001 mm bis 3 mm aufweist, ein Flächenverhältnis der Vielzahl von Löchern (201, 401) zu einer Gesamtfläche der leitfähigen Schicht (102, 202), die auf einer Fläche der Isolierschicht (101, 201) liegt, 0,1 % bis 30 % beträgt, und zwei benachbarte Löcher (201, 401) der Vielzahl von Löchern (201, 401) einen Abstand in einem Bereich von 0,2 mm bis 5 mm zueinander haben.

6. Stromabnehmer (10, 20) nach einem der Ansprüche 1 bis 5, **dadurch gekennzeichnet, dass** die Isolierschicht (101, 201) mit einem Farbstoff zum Anpassen einer Lichtdurchlässigkeit T der Isolierschicht (101, 201) hinzugefügt wird, und die Lichtdurchlässigkeit T der Isolierschicht (101, 201) Folgendem entspricht: 15 ≤ T ≤ 95 %.

7. Stromabnehmer (10, 20) nach einem der Ansprüche 1 bis 5, **dadurch gekennzeichnet, dass** die Isolierschicht (101, 201) mit einem Farbstoff zum Anpassen einer Lichtdurchlässigkeit T der Isolierschicht (101, 201) hinzugefügt wird, und die Lichtdurchlässigkeit T der Isolierschicht (101, 201) Folgendem entspricht: 15 ≤ T ≤ 90 %.

8. Stromabnehmer (10, 20) nach einem der Ansprüche 1 bis 7, **dadurch gekennzeichnet, dass** das Metalloxid aus einer Gruppe ausgewählt wird, die aus Aluminiumoxid, Kobaltoxid, Chromoxid, Nickeloxid und Kombinationen davon besteht.

9. Stromabnehmer (10, 20) nach einem der Ansprüche 1 bis 8, **dadurch gekennzeichnet, dass** das Metall aus einer Gruppe ausgewählt wird, die aus Nickel, Chrom, einer nickelbasierten Legierung, einer kupferbasierten Legierung und Kombinationen davon besteht, wobei das Metalloxid vorzugsweise aus einer Gruppe ausgewählt wird, die aus Aluminiumoxid, Kobaltoxid, Chromoxid, Nickeloxid und Kombinationen davon besteht, und der leitfähige Kohlenstoff aus einer Gruppe ausgewählt wird, die aus leitfähigem Ruß, Kohlenstoffnanoröhrchen, Acetylenruß, Graphen und Kombinationen davon besteht.

10. Stromabnehmer (10, 20) nach einem der Ansprüche 1 bis 9, **dadurch gekennzeichnet, dass** die zweite Schutzschicht (1032, 2032) aus dem Metalloxid hergestellt ist.

11. Stromabnehmer (10, 20) nach einem der Ansprüche 1 bis 10, **dadurch gekennzeichnet, dass** die leitfähige Schicht (102, 202) eine Dicke von D2 aufweist, wobei
D3 ≤ O,1D2 und 1nm ≤ D3 ≤ 200 nm, und
D3' ≤ 0,1D2 und 1 nm ≤ D3' ≤ 200 nm.

12. Stromabnehmer (10, 20) nach einem der Ansprüche 1 bis 11, **dadurch gekennzeichnet, dass** 10 nm ≤ D3 ≤ 50 nm und 10 nm ≤ D3' ≤ 50 nm.

13. Stromabnehmer (10, 20) nach einem der Ansprüche 1 bis 12, **dadurch gekennzeichnet, dass** die leitfähige Schicht (102, 202) eine Dicke von D2 aufweist, wobei 30 nm ≤ D2 ≤ 3 µm.

14. Elektrodenplatte, **dadurch gekennzeichnet, dass** sie den Stromabnehmer (10, 20) nach einem der Ansprüche 1 bis 13 und eine aktive Elektrodenmaterialschicht (11, 21), die mindestens auf mindestens einer Fläche des Stromabnehmers (10, 20) gebildet ist, umfasst.

15. Elektrochemische Vorrichtung, **dadurch gekennzeichnet, dass** sie eine positive Elektrodenplatte (1), einen Separator und eine negative Elektrodenplatte (2) umfasst, wobei die positive Elektrodenplatte (1) und/oder die negative Elektrodenplatte (2) die Elektrodenplatte nach Anspruch 14 ist.

## Revendications

1. Collecteur de courant (10, 20) comprenant
une couche d'isolation (101, 201) ;
une couche conductrice (102, 202) au moins située sur au moins une surface de la couche d'isolation (101, 201) ; et
une première couche de protection (1031, 2031) disposée sur une surface de la couche conductrice (102, 202) orientée à l'opposé de la couche d'isolation (101, 201),
le collecteur de courant (10, 20) étant muni d'une pluralité de trous (201, 401) pénétrant à travers la couche d'isolation (101, 201), la couche conductrice (102, 202) et la première couche de protection (1031, 2031), et
la première couche de protection (1031, 2031) étant constituée d'un oxyde métallique,
**caractérisé en ce que** la couche d'isolation (101, 201) est additionnée d'un colorant permettant de régler une transmittance de la lumière T de la couche d'isolation (101, 201), et la transmittance de la lumière T de la couche d'isolation (101, 201) satisfait à : 0 ≦ T ≦ 98 %, la transmittance de la lumière ayant été mesurée au moyen d'un procédé selon la description.

2. Le collecteur de courant (10, 20) selon la revendication 1, comprenant en outre une seconde couche de protection (1032, 2032) disposée sur une surface de la couche conductrice (102, 202) orientée vers la couche d'isolation (101, 201), la seconde couche de protection (1032, 2032) étant constituée d'un métal, d'un oxyde métallique ou d'un carbone conducteur,
la première couche de protection (1031, 2031) présente une épaisseur D3, et la seconde couche de protection (1032, 2032) présente une épaisseur D3', et
D3 est supérieure à D3', 0,5 D3 ≦ D3' ≦ 0,8 D3.

3. Le collecteur de courant (10, 20) selon la revendication 1, dans lequel la couche conductrice (102, 202) est disposée en outre sur les surfaces de paroi de la pluralité de trous (201, 401), et une partie de la couche conductrice (102, 202), située sur la ou les surfaces de la couche d'isolation (101, 201), est reliée partiellement ou entièrement à une partie de la couche conductrice (102, 202) située sur les surfaces de paroi de la pluralité de trous (201, 401).

4. Le collecteur de courant (10, 20) selon la revendication 3, dans lequel la ou les surfaces de la couche d'isolation (101, 201) comprennent une surface supérieure et une surface inférieure de la couche d'isolation (101, 201), et une partie de la couche conductrice (102, 202), située sur la surface supérieure et sur la surface inférieure de la couche d'isolation (101, 201), est reliée partiellement ou entièrement à la partie de la couche conductrice (102, 202) située sur les surfaces de paroi de la pluralité de trous (201, 401).

5. Le collecteur de courant (10, 20) selon les revendications 3 ou 4, dans lequel chaque trou, parmi la pluralité de trous (201, 401), comporte une ouverture comprise entre 0,001 mm et 3 mm, un rapport de superficie de la pluralité de trous (201, 401) à une surface entière de la couche conductrice (102, 202) située sur une surface de la couche d'isolation (101, 201) est compris entre 0,1 % et 30 %, et deux trous adjacents (201, 401), parmi la pluralité de trous (201, 401), comportent un espacement compris entre 0,2 mm et 5 mm l'un par rapport à l'autre.

6. Le collecteur de courant (10, 20) selon l'une quelconque des revendications 1 à 5, **caractérisé en ce que** la couche d'isolation (101, 201) est additionnée d'un colorant permettant de régler une transmittance de la lumière T de la couche d'isolation (101, 201), et la transmittance de la lumière T de la couche d'isolation (101, 201) satisfait à : 15 % ≦ T ≦ 95 %.

7. Le collecteur de courant (10, 20) selon l'une quelconque des revendications 1 à 5, **caractérisé en ce que** la couche d'isolation (101, 201) est additionnée d'un colorant permettant de régler une transmittance de la lumière T de la couche d'isolation (101, 201), et la transmittance de la lumière T de la couche d'isolation (101, 201) satisfait à : 15 % ≦ T ≦ 90 %.

8. Le collecteur de courant (10, 20) selon l'une quelconque des revendications 1 à 7, **caractérisé en ce que** l'oxyde métallique est choisi dans le groupe constitué par l'oxyde d'aluminium, l'oxyde de cobalt, l'oxyde de chrome, l'oxyde de nickel et leurs combinaisons.

9. Le collecteur de courant (10, 20) selon l'une quelconque des revendications 1 à 8, **caractérisé en ce que** le métal est choisi dans le groupe constitué par le nickel, le chrome, un alliage à base de nickel, un alliage à base de cuivre et leurs combinaisons, l'oxyde métallique est choisi de préférence dans le groupe constitué par l'oxyde d'aluminium, l'oxyde de cobalt, l'oxyde de chrome, l'oxyde de nickel et leurs combinaisons, et le carbone conducteur est choisi dans le groupe constitué par le noir de carbone conducteur, des nanotubes de carbone, le noir d'acétylène, le graphène et leurs combinaisons.

10. Le collecteur de courant (10, 20) selon l'une quelconque des revendications 1 à 9, **caractérisé en ce que** la seconde couche de protection (1032, 2032) est constituée d'oxyde métallique.

11. Le collecteur de courant (10, 20) selon l'une quelconque des revendications 1 à 10, **caractérisé en ce que** la couche conductrice (102, 202) présente une épaisseur D2,
D3 ≦ 0,1 D2 et 1 nm ≦ D3 ≦ 200 nm, et
D3' ≦ 0,1 D2 et 1 nm ≦ D3' ≦ 200 nm.

12. Le collecteur de courant (10, 20) selon l'une quelconque des revendications 1 à 11, **caractérisé en ce que** 10 nm ≦ D3 ≦ 50 nm, et 10 nm ≦ D3' ≦ 50 nm.

13. Le collecteur de courant (10, 20) selon l'une quelconque des revendications 1 à 12, **caractérisé en ce que** la couche conductrice (102, 202) présente une épaisseur D2, 30 nm ≦ D2 ≦ 3 µm.

14. Plaque d'électrode **caractérisée en ce qu'**elle comprend le collecteur de courant (10, 20) selon l'une quelconque des revendications 1 à 13, et une couche (11, 21) de matériau actif d'électrode au moins formée sur au moins une surface du collecteur de courant (10, 20).

15. Dispositif électrochimique **caractérisé en ce qu'**il comprend une plaque d'électrode positive (1), un séparateur et une plaque d'électrode négative (2), la plaque d'électrode positive (1) et/ou la plaque d'électrode négative (2) étant la plaque d'électrode selon la revendication 14.
